# EUROPEAN PATENT SPECIFICATION

(11) **EP 4 279 423 B1**
(45) Date of publication and mention of the grant of the patent: **03.12.2025**
(21) Application number: 23173299.1
(22) Date of filing: 15.05.2023
(51) Int. Cl.: B65G 23/30, B65G 45/10, B65G 45/22, B65G 17/18

(54) **CONVEYOR**
FÖRDERER
CONVOYEUR

(30) Priority: 18.05.2022 EP 22174089; 03.06.2022 EP 22177254
(43) Date of publication of application: 22.11.2023
(73) Proprietor: Interroll Holding AG, 6592 Sant'Antonino (CH)
(72) Inventor: Kronholz, Stephan, 41836 Hückelhoven (DE); Lubomierski, Kai, 41836 Hückelhoven (DE); Zinn, Jürgen, 41836 Hückkelhoven (DE); Rosek, Markus, 41836 Hückelhoven (DE); Rydlewski, Thomas, 40470 Düsseldorf (DE); Baltes, Klaus, 50127 Bergheim (DE); Oberländer, Jan, 40221 Düsseldorf (DE)
(74) Representative: Kohlhof, Stephan

(56) References cited:
- SE-B- 440 065
- US-A- 1 856 498
- US-A- 2 534 054
- US-A- 4 066 161
- US-A- 4 800 704
- US-B2- 7 841 462
- US-B2- 9 004 272

## Description

The invention refers to a conveyor, in particular a food conveyor. In particular the invention refers to a usage of a conveyor for conveying unpacked food.

Hygiene plays a very important role in the food industry. It is unavoidable that food comes into contact with microbiological germs. However, the extent of contamination has a significant effect on the shelf life of the food. In particular, cross-contamination, i.e. the transfer of contamination from one piece of food to another piece of food via the processing equipment, is a critical parameter.

Until now, the equipment involved in food processing has to be cleaned. This is done at set intervals, which are determined depending on the level of contamination or contamination with biological germs. In other words, when the contamination load is higher, cleaning takes place more frequently than when the contamination load is lower. For a deep cleaning of the plants, parts of the production have to be shut down.

WO 2020/221717 A1 discloses a conveyor used in food industry. The conveyor has a modular conveying belt with a plurality of belt modules. The top of said belt modules presents a smooth, flat surface, on which a piece of food comes to rest. The flat surface extends in top view in a region where the belt modules are connected to each other by respective link connections. The link connections represent areas where biological germs can nestle well.

US 4 800 704 A discloses an apparatus, which is provided with means for conveying fruits or vegetables provided with a plurality of supporting shafts installed at specific intervals in the lengthwise direction of endless conveyor belts between said plurality of endless belts installed in parallel with each other in loose condition so that intervals between said supporting shafts can be varied as required. During examination procedure this document was considered by the issuing authority as the closest prior art and to disclose a conveyor according to the preamble of claim 1.

It is the object of the present invention to provide an improved conveyor.

The invention is solved by the subject of the independent claims; embodiments are subject of the subclaims and the description.

The invention comprises a conveyor, in particular a food conveyor, in particular unpacked-food conveyor. The conveyor comprises a conveying carrier, wherein the conveying carrier is adapted to carry food from a first end to a second end along a, in particular horizontal, conveying direction. The conveying carrier comprises a plurality of separate carrier segments which run on a circumferential orbit, so that the carrier segments define an upper run, a lower run, and curved turning sections connecting the upper run and the lower run. Said carrier segments having a carrier rod, wherein the plurality of carrier rods located on said upper run forming a conveying surface, in particular on which the conveyed food comes to rest.

According to the invention, the carrier rod have on their outer perimeter at least two, in particular exact three or exact four, lateral surfaces, each of which are transferable between
- a conveying position, in particular within said carrier segment, in which, said lateral surface is part of the conveying surface, and
- a dislocated position, in particular within said carrier segment, in which said lateral surface is not part of the conveying surface but another one of the lateral surfaces of the same carrier rod is part of the conveying surface.

To switch over a carrier rod between the conveying position and the dislocated position, there are more options available. In a first option each of the carrier rods can be turned separately and/or independently from each other. This option is described in more detail with reference to the figures. In a second option the plurality of carrier or all carrier rods are switched over together. Here it may be possible to remove the carrier rods or the complete carrier together from the main conveyor frame, turn the rods, and move the carrier rods again to the position on the main conveyor frame.

Up to now, in any conventional modular belts the belt modules were replaced as soon as the upper surface of the modules are worn out. An advantage of the invention is, that even if one surface is worn out the rod can be used for additional one, two or three further periods of service time, by simply amending the position of the rods so that a lateral surface can be brought from the dislocated position into the conveying position. The costs for new modules and for the service shut down times can be reduced.

In an embodiment transferable between said conveying position and said dislocated position by a rotation of said carrier rod, wherein said carrier rod is rotatable along an axis, which is in particular perpendicular to the direction of travel and oriented horizontally, viewed when the carrier rod is in the upper run. The option for rotation of the rods make the transfer between the conveying position and the dislocated position simple and repeatable.

In an embodiment the conveyor comprises a rotation control adapted to selectively transfer said lateral surfaces between said conveying position and said dislocated position by a rotation of the carrier rod. As an option the rotation control comprising a stationary rotation control part and a mobile rotation control part traveling with said carrier segment, wherein for controlling the rotation of said carrier rods the mobile rotation control part and the a stationary rotation control part interacting with each other. The rotation control ensures, that the position change of the lateral surfaces are conducted at defined points in time.

In an embodiment, the carrier rods of neighbored carrier segment can be arranged in different distances between each other, in particular between a smaller first distance and a larger second distance.

In an embodiment the conveyor comprises a distance control adapted to selectively adjust said distance between carrier rods of neighbored carrier segments between a first smaller distance and a second larger distance. As an option the distance control comprising a stationary distance control part and a mobile distance control part traveling with said carrier segment, wherein for controlling the distance of said carrier rods the mobile distance control part and the a stationary distance control part interacting with each other. The distance control ensures, that the a change of the lateral surfaces are conducted at defined points in time.

Here as an example, carrier rods of neighbored carrier segments located, in particular in the upper run, at a first distance, where said carrier rods provide at least partially a closed conveying surface.

In particular when said carrier rods of neighbored carrier segments are arranged in a first distance to each other and/or forming a closed conveying surface, the carrier rods of neighbored carrier segments are touching each other. In addition, said carrier rods of neighbored carrier segments in the lower run may be located at said second distance.

In an embodiment the conveyor comprises a segment guidance adapted to guide the carrier segments along the conveying direction. A s an option the segment guidance comprising a stationary guidance part and a mobile guidance part traveling with said carrier segment. For guiding the carrier segments along the conveying direction the mobile guidance part and the a stationary guidance part interacting with each other.

In an embodiment said carrier rods have a prismatic shape. The prismatic shape may have a 4-sided or 3-sided prismatic shape, which means that the cross section having a rectangular in particular quadratic or a having a triangular cross section in particular an equilateral triangular cross section. Here it is of advantage if said carrier rods have a at least a partial rotational symmetry. As a consequence, upon rotation of a rod, a lateral surface comes to rest on a previous position of another lateral surfaces of the same carrier rod.

In an embodiment the conveyor comprises a treatment facility, in which the food is subject to a treatment, the treatment is distinct from a conveying operation,
in particular the treatment facility is a cutting station in which the food is subject to a cutting treatment. In such a treatment facility the wear of the said carrier segments /rods may is usually in creased compared to a pure conveying device without treatment. A a consequence, the above advantage is thus more pronounced.

In an embodiment the conveyor comprising a cleaning station, adapted to perform a cleaning operation to the carrier rods, in particular to carrier rods located in the lower run. Optionally increasing the distance and/or changing the rotational position of the rods can improve the cleaning effect.

In an embodiment the conveyor is adapted so when passing the cleaning station, said carrier rods of neighbored carrier segments are located at a second distance to each other, the second distance is in particular larger than a first distance. By increasing a distance, it is made easier for to clean the rods.

In general, the distance between two rods is measured with reference to the centers of the respective rods.

In an embodiment when passing the cleaning station, said carrier rods are subject to a rotational movement along an axis of rotation, said axis of rotation is defined by said carrier segment. By rotating the rods during leaning, a more extensive cleaning effect can be achieved.

In an embodiment the conveyor defines in top view a conveying corridor extending from the first end to the second end parallel to the conveying direction. The conveyed food is located exclusively within the conveying corridor. At last one, in particular all, of the following components are located outside of the conveying corridor, when viewed in top view: a rotation control; a stationary rotation control part and/or a mobile rotation control part; a distance control; a stationary distance control part and/or a mobile distance control part a connector, connecting carrier rods of different carrier segments; a direction guidance, adapted to guide the carrier segment along the direction of travel; a stationary guidance part and/or a mobile guidance part; drive transmission adapted to transmit a drive force from a conveyor drive to the carrier segments; a stationary drive transmitting part and/or a mobile drive transmitting part. Said mobile parts are attached to the carrier rod and the stationary parts are attached to a main conveyor frame.

The previous components usually provide good nesting capabilities for germs. Since these components are now located outside of the corridor, the risk of contamination between the food and these components (in particular by gravity movement) and vice versa is reduced.

In particular the conveyor none of the following components are located inside of the conveying corridor, when viewed in top view:
a stationary rotation control part and a mobile rotation control part; a connector connecting carrier rods of different carrier segments; a stationary guidance part and a mobile guidance part; a stationary drive transmitting part and a mobile drive transmitting part;
wherein said mobile parts are attached to the carrier rod and the stationary parts are attached to a main conveyor frame.

The invention comprises also a usage of said for conveying unpacked food, in particular unpacked meat, where the unpacked food is in immediate contact with the conveying carrier.

In an embodiment the conveying surface is used as working surface, in which the food is subject to a treatment in particular a cutting treatment.

In an embodiment the food to be conveyed is exclusively located within said corridor.

The unpacked food is in particular meat, where the term "meat" comprises explicitly meat of any kind of animals, such as beef, pork, chicken, turkey, fish. The meat is in particular rare meat.

In general, the invention is not limited to a food conveyor. In particular the invention can be applied to any kind of conveyor.

In particular the invention can be limited to a food conveyor and/or a pharmaceutical conveyor.

The invention is described with respect to the figures; herein show
- fig. 1: an inventive conveyor in a perspective view
- fig. 2: a detail of the conveyor according to figure 1 in perspective view;
- fig. 3: another detail of the conveyor according to figure 1 in perspective view;
- fig. 4: a first embodiment carrier rod of the conveyor according to figure 1 in frontal view;
- fig. 5: two embodiments of a carrier rod of the conveyor according to figure 1 in perspective view;
- fig. 6: schematically the conveyor according to figure 1 in side view during usage;
- fig. 7: schematically the conveyor according to figure 1 in top view during usage;
- fig. 8: schematically a distance control mechanism of the conveyor of fig 1 in side view.

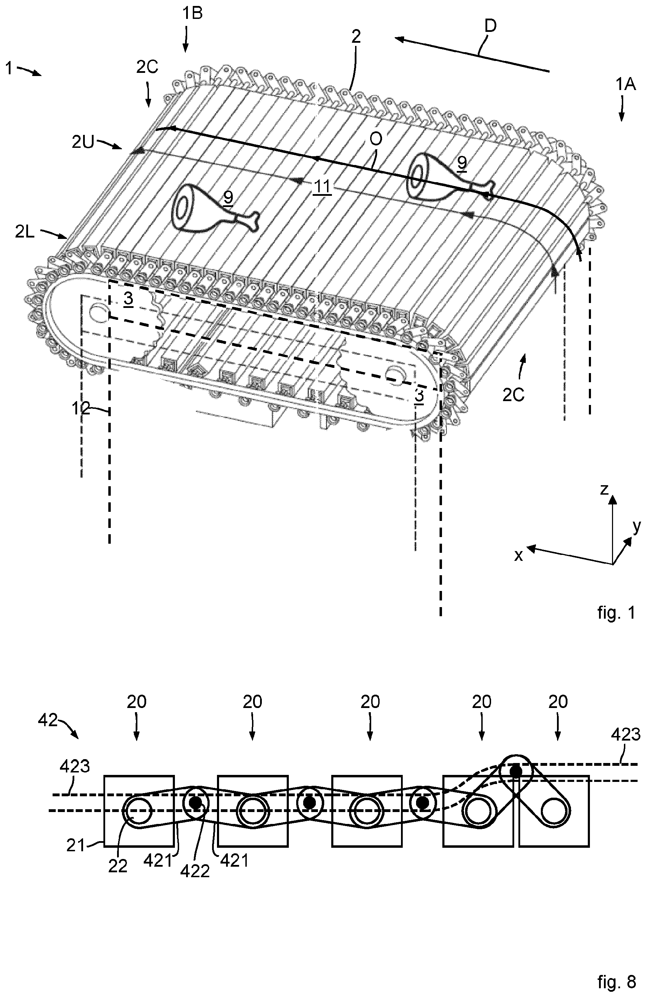

Figures 1 to 8 show an inventive conveyor 1 and details thereof and will be described together.

The inventive conveyor 1 here is a food conveyor and is adapted to convey unpacked food 9 from a first end 1A to a second end 1B on a conveying surface 11. The food conveyor 1 is in particular adapted and used for conveying rare meat.

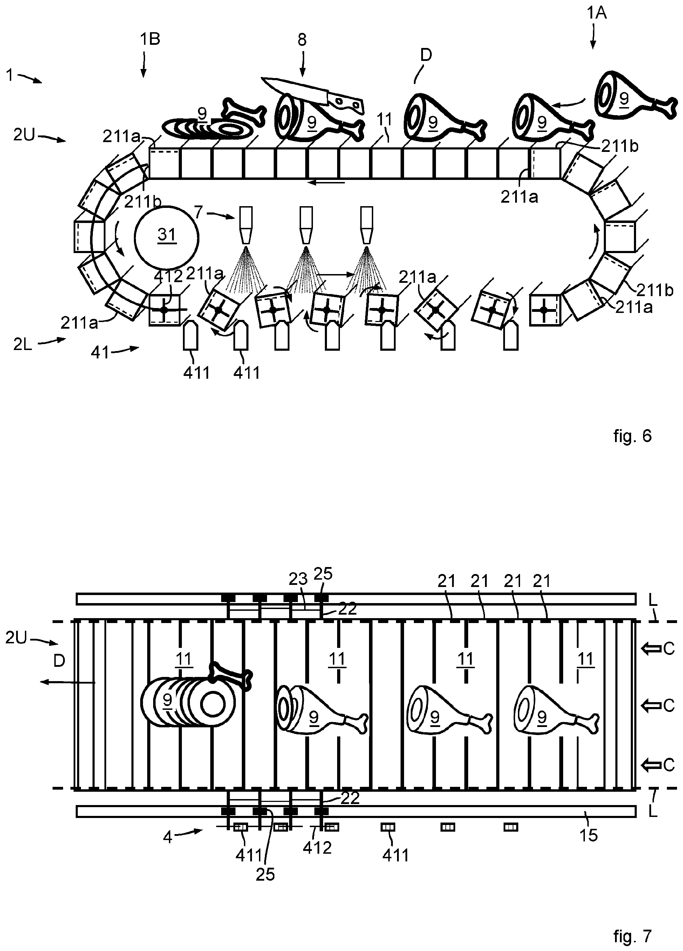

The food conveyor 1 comprises an endless conveying carrier 2, which is wound around deflection wheels 3 at the first and second end 1A, 1B (fig. 1). Consequently the conveying carrier 2 forms an upper run 2U on the upper side of the conveyor 1 and a lower run 2L on the lower side of the conveyor 1 (figures 1, 6, 7). Curved turning sections 2C at the ends 1A, 1B connect the upper run and the lower run. One of the deflection wheels may be connected to a drum motor 31 (see schematically in fig. 6), where the drum motor 31 is an example of a conveyor drive.

The upper run 2U forms on its top a conveying surface 11, on which the food 9 to be conveyed is located (figures 1, 6, 7).

Here the food 9 is in particular in immediate contact with the conveying carrier 2. This immediate contact results in a transfer of germs from the food 9 to the carrier 2. Therefore the hygienic properties of the food conveyor 1 are of particular relevance in the present conveyor.

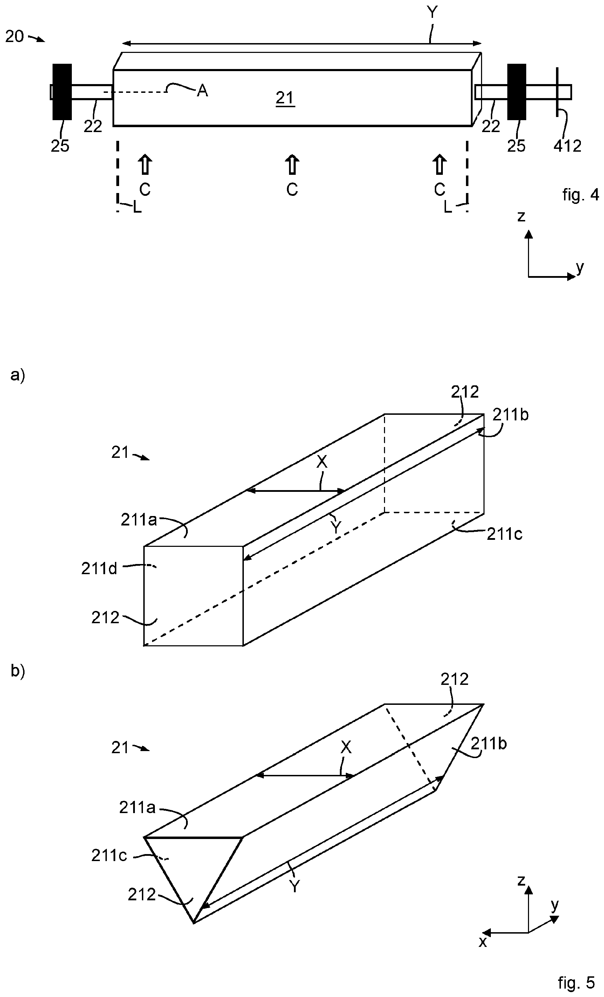

The carrier 2 comprises a plurality of carrier segments 20 (figure 4). Each carrier segment 20 comprises a carrier rod 21, which provides in combination with the carrier rod 21 of other carrier segments 20 the conveying surface 11 (figure 6, 7).

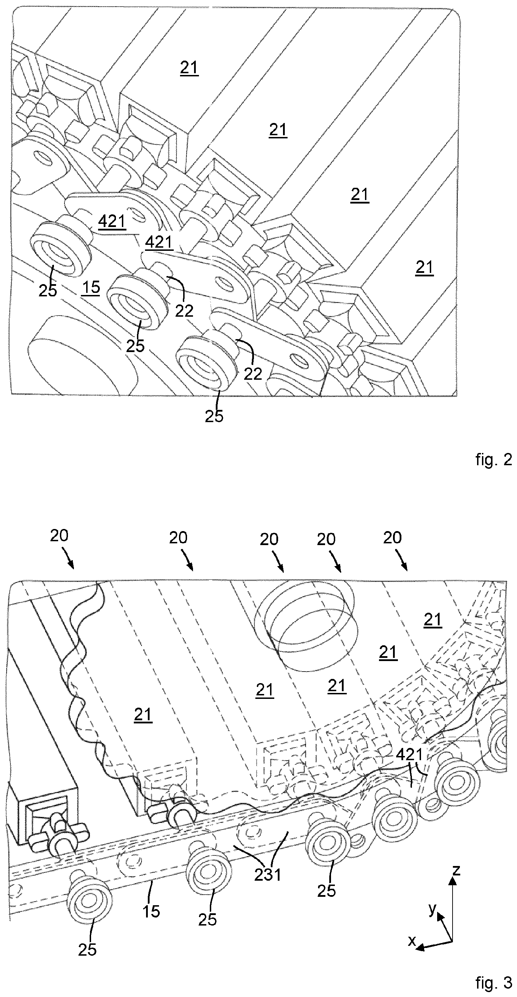

The carrier segments 20 further comprise a carrier axle 22, protruding out of the carrier rod 21 at each end of the carrier rod 21, the axle carrying a guiding wheel 25 at each end. The axle 22 may comprise two separate axle shafts or may comprise a continuous axle element. The guiding wheels 25 serve for guiding the carrier segments 20 on a guiding rail 15 (figure 2, 3, ). Instead of a guiding wheel another type of guiding may be provided e.g. a guiding slider. The axle 22 may define an axis of rotation for the carrier rod 21.

Reference is now made to figures 1 and 6. In the upper run 2U, the carrier rods 21 are located close to each other, in particular so as to provide a closed conveying surface 11.

In the upper run 2U neighboured carrier rods 21 are held to each to each other at a first distance, in particular where the neighboured carrier rods 21 touching each other.

In the lower run 2L neighboured carrier rods 21 are held to each to each other at a second distance, wherein the second distance is larger than the first distance. In particular the neighboured carrier rods 21 are not touching each other.

Each carrier rod 21 has a straight prismatic shape, in particular a 4-sided prismatic shape having a rectangular in particular quadratic base 212 (figure 5a) or a 3-sided prismatic shape having a triangular base 212 (figure 5b), where n-sided refers the number of lateral sides without the base side.

Thereby an extension Y of the carrier rod 21 in a direction (y-direction) perpendicular to the conveying direction D (x- direction) is at least ten times, in particular twenty times larger than an horizontal extension X of the cross section of the carrier rod (x-z-plane).

Four lateral surfaces 211a-221d (figure 5a) / three lateral surfaces 211-211c (figure 5b) establish carrier surfaces 211. Each of said lateral surfaces 211 can be part of the conveying surface 11, depending on the rotational orientation of the carrier rod 21. In figure 6 on the left side, a first lateral surface 211a is part of the conveying surface 11; said first lateral surface 211a therefore is in a conveying position. All other lateral surfaces are in a dislocated position and are not part of the conveying surface 11.

The lateral surfaces are transferable between the conveying position and the dislocated position as described later. Therefore the carrier rod 21 can be rotated around an axis of rotation A (Figure 4), which is oriented perpendicular to the conveying direction D and parallel to the horizontal plane.

The conveyor comprises a treatment station 8, in which the food 9 is subject to a treatment, exemplarily illustrated by a knife in figure 6. In particular the treatment station 8 is a cutting station in which the food 9 is subject to a cutting treatment.

The conveying surface 11 forms a working surface. Here the food can be subject to the treatment in particular a cutting treatment, as illustrated. The working surface is a working surface and in particular adapted to provide a counter bearing during treatment, in particular for the cutting treatment. For said cutting process it is advantageous, if the conveying surface is closed as described above.

The conveyor comprises a cleaning station 7 (figure 6). The cleaning station 7 is located in a manner to interact with the carrier rods 21 in particular in the lower run 2L. In the cleaning station the neighboured carrier rods 21 are held at the second distance to each other. As an example the cleaning station 7 comprises a spraying arrangement with one or more spray nozzles, alternatively or combination thereto the cleaning station may comprise a UV light source and/or mechanical cleaning means, like a brush and/or chemical cleaning means and/or chemical disinfection means.

Since the carrier rods 21 are held in a second distance to each other in the lower run 2L, an accurate and entire cleaning of the carrier rods 21 is possible.

The carrier rod 21 is simply constituted by the lateral surfaces of a prism, which are complete flat, without any rices, joints or small parts, which otherwise could provide a refuge for contaminants and germs. There remain no areas of the carrier rods, which are difficult to clean.

One purpose of said changed rotational orientation is to achieve an improved hygienic status of said carrier rod 21, since all lateral surfaces 211a-d of the carrier rod 21 can face the cleaning station 7 at a specific time.

Figure 6 shows the sequence of a carrier rod 21 during cleaning in the lower run 2L. When a carrier rod 21 reaches the second end 1B of the conveyor 1, a first lateral surface 211a is oriented upwards and is in contact with the food 9. For better illustration the first lateral surface 211a is marked with a dashed line. In the lower run 2L the distance between the carrier rods 21 increases. Now the carrier rod 21 is brought into rotation. During rotation the orientation of the lateral surface 211a-d in view of the cleaning station is varied. In particular all lateral surfaces can be brought into a condition where it faces the cleaning device.

Subsequently the carrier rod 21 reaches the first end 1A and is turned from the lower run 2Lto the upper run 2U. The first lateral surface 211a is now in an orientation where it is not facing upwards. Now a different, second lateral surface 211b is facing upwards. In the next cleaning sequence, a third lateral 211c will be the upwards facing lateral surface and so on.

So after any sequence, another one of the lateral surfaces 211a-d will be the upwards facing lateral surface 211, which becomes a part of the conveying surface 11. After each cycle, the rotational position of the carrier rod 21 varies, so that after four cycles (in case of embodiment of figure 5a) or three cycles (in case of embodiment of figure 5b), the first lateral surface 211a is again facing upwards on the upper run 2L. This results in low wearout, as the surface is subjected to impact only every fourth / third cycle. In addition, all lateral surfaces 211 are subject to an increased amount of cleaning before being used again as within the conveying surface 11.

For conducting the selective rotation of the carrier rod 21 a rotation control 41 is provided (figure 6). In the present embodiment the rotation control 41 is mechanical as an example. Along the lower run 2L a number of stationary cams 411 are provided as stationary rotation control parts. Said cams 411 interact with followers 412 as mobile rotation control parts, wherein the followers are rotatably fixed with on one of said carrier rods 21. The follower 412 may be a component of the carrier segment 20. When the carrier rod 21 passes a cam 411 in direction of the lower run 2L, the cam 411 gets in contact with the follower 412 and forces the follower 412 to deflect, resulting in a rotation of the carrier rod 21. In particular the follower 412 can be an integral part of the carrier rod 21.

There are plenty of other control mechanisms possible.

As described previously the distance of neighbored carrier rods 21 can be varied. A distance control 42 is provided to control said distance (figure 8). As an example neighbored carrier segments 20 are connected to each other by two connector brackets 421 (figure 2) on each side. The connector bracket 421, connecting two carrier segments 20, are connected to each other by a respective connector link 422, e.g. a bolt. Said connector brackets 421 can be arranged in different angles to each other. In case the connector brackets 421 are oriented in a smaller angle, the carrier segments 20 are arranged at a smaller distance (right sides of figure 8); in case the connector brackets 421 are oriented in an larger angle, the carrier segments 20 are arranged at a larger distance (left side of figure 8). Said angle can be adjusted by a respective control rail 423, which forces said connector link 422 of the connector into a certain relation compared to the axle 22. The axle 22 is guided by a guide rail 15 separate to the control rail 423.

The connector link and the connector brackets are examples of mobile distance control parts; the control rail is an example of a stationary distance control part.

The connector link 422 and the connector brackets 421 are an example of a connector, connecting carrier rods 21 of different carrier segments 20.

As apparent from the top view of figure 7, a corridor C is established, which is aligned parallel to the conveying direction. During conveying operation the food to be conveyed 9 are exclusively located inside of said corridor C. Consequently such components have an increased risk to get in contact with germs, which are located within said corridor C, where components outside of said corridor have a lower risk of getting in contact with germs.

On the contrary, usually the pieces of food 9 conveyed within said corridor C have low risk of getting in contact with germs located on the components outside of said corridor. Consequently the components outside of said corridor C may have a lower degree of cleanliness.

The carrier rod 21 is located within the corridor C, where peripheral parts of the carrier rod 21 can be located outside, so that the food within the corridor C can be supported by the carrier rod 21. At least the area of the carrier axle 22, which is laterally protruding from the carrier rod 21, is located outside of the corridor C. The guiding wheel 25 and the follower 412 are located outside of said corridor.

Said components of the rotation control 41 and of the distance control 42 are located outside of the corridor C when viewed in top view.

Also the components for connecting the carrier segments with each other are located outside of the said corridor.

Also the components for providing a drive force between a conveyor drive and the carrier segments are located outside of the corridor. As an example the plurality of axle 22 of the carrier segment have the function of to interact with a drive sprocket drive sprocket. In the present example the drive sprocket is integrally formed with the deflection wheel 3. The drive sprocket connected to a drum motor (fig. 6).

The drive sprocket 33 is a stationary drive transmitting part, transmitting a drive force to the axle 22 of the carrier segment 20. The axle is an example of a mobile drive transmitting part.

So during normal operation the pieces food 9 do not get in contact with the components of the rotation control 41 and the distance control 42 and the drive transmitting part 3, 22. So even if germs drop off the food 9 downwards, they stay on the carrier rod 21 until the carrier rod 21 gets into the cleaning station 7. So there is a widely reduced chance, that a subsequent piece of food 9 will get in contact with germs, which was left to the conveyor by a preceding piece of food.

### List of reference signs

- 1: (food) conveyor
- 1A: first end
- 1B: second end
- 2: (endless) conveying carrier
- 2U: upper run
- 2L: lower run
- 2C: curved turning section
- 3: deflection wheel / drive sprocket
- 31: drum motor
- 5: direction guidance
- 7: cleaning station
- 8: treatment facility, cutting station
- 9: object / unpacked food
- 11: conveying surface
- 12: main conveyor frame
- 15: stationary guidance part / guiding rail
- 20: carrier segment
- 21: carrier rod
- 211a-d: carrier surface / lateral face
- 212: frontal face
- 22: carrier axle
- 25: mobile guidance part / guide wheel
- 32: carrier receptable
- 41: rotation control
- 411: stationary rotation control part / cam
- 412: mobile rotation control part / follower
- 42: distance control
- 421: mobile distance control part / connector bracket
- 422: mobile distance control part / connector link
- 423: stationary distance control part / control rail
- D: conveying direction
- C: conveying corridor
- L: Line
- A: axis of rotation
- O: circumferential orbit

## Claims

1. Conveyor (1), in particular food conveyor (1), in particular unpacked-food conveyor,
the conveyor (1) comprises a conveying carrier (2),
wherein the conveying carrier (2) is adapted to carry an object, in particular food (9), from a first end (1A) to a second end (1B) along a, in particular horizontal, conveying direction (D),
the conveying carrier (2) comprises a plurality of separate carrier segments (20) which run on a circumferential orbit (O), so that the carrier segments (20) define an upper run (2U), a lower run (2L), and curved turning sections (2C) connecting the upper run (2U) and the lower run (2L);
wherein the carrier segments (20) having a carrier rod (21), wherein the plurality of carrier rods (21) located on said upper run (2U) forming a conveying surface (11), in particular on which the conveyed object (9) comes to rest,
**characterized in**
**that** each carrier rod (21) has on its outer perimeter at least two lateral surfaces (211a-d), each of which are transferable between
- a conveying position, in particular within said carrier segment (20), in which, said lateral surface (211a) is part of the conveying surface (11), and
- a dislocated position, in particular within said carrier segment (20), in which said lateral surface (211b-d) is not part of the conveying surface (11) but another one of the lateral surfaces (211a) of the same carrier rod (21) is part of the conveying surface (11).

2. Conveyor (1) according to the preceding claim,
**characterized in**
**that** each carrier rod (21) has on its outer perimeter exact three or exact four of said lateral surfaces (211a-d).

3. Conveyor (1) according to any of the preceding claims,
**characterized in**
**that** the lateral surfaces (211a-d) are transferable between said conveying position and said dislocated position by a rotation of said carrier rod (21),
wherein said carrier rod (21) is rotatable along an axis, which is in particular perpendicular to the direction of travel (D) and oriented horizontally, viewed when the carrier rod (21) is in the upper run (2U).

4. Conveyor (1) according any of claims 2 or 3,
**characterized by** a
rotation control (41) adapted to selectively transfer said lateral surfaces (211a-d) between said conveying position and said dislocated position by a rotation of the carrier rod (21);
in particular the rotation control (41) comprising a stationary rotation control part (411) and a mobile rotation control part (412) traveling with said carrier segment (20), wherein for controlling the rotation of said carrier rods the mobile rotation control part (412) and the a stationary rotation control part (411) interacting with each other.

5. Conveyor (1) according any of the preceding claims,
**characterized by**
a distance control (42) adapted to selectively adjust a distance between carrier rods (21) of neighbored carrier segments (20) between a first smaller distance and a second larger distance;
in particular the distance control (42) comprising a stationary distance control part (423) and a mobile distance control part (421, 422) traveling with said carrier segment (20), wherein for controlling the distance of said carrier rods the mobile distance control part (421, 422) and the a stationary distance control part interacting with each other.

6. Conveyor (1) according any of the preceding claims,
**characterized by**
a segment guidance (5) adapted to guide the carrier segments (20) along the conveying direction (D),
in particular in particular the segment guidance (5) comprising a stationary guidance part (15) and a mobile guidance part (25) traveling with said carrier segment (20), wherein for guiding for guiding the carrier segments (20) along the conveying direction (D) the mobile guidance part (25) and the a stationary guidance part (15) interacting with each other.

7. Conveyor (1) according any of the preceding claims,
**characterized in**
**that** carrier rods (21) of neighbored carrier segments (20) located in the upper run (2U) are located at a first distance, where said carrier rods (21) provide at least partially a closed conveying surface (11),
in particular said carrier rods (21) of neighbored carrier segments (20) located in the upper run (2U) touching each other;
optionally: said carrier rods (21) of neighbored carrier segments (20) located in the lower run (2L) are located at a second distance, where said carrier rods (21) provide at least partially a closed conveying surface (11), in particular wherein the second distance is larger than the first distance.

8. Conveyor (1) according any of the preceding claims
**characterized in**
**that** said carrier rods (21) have a prismatic shape,
in particular the prismatic shape having a 4-sided prismatic shape having a rectangular in particular quadratic cross section (212) or a 3-sided prismatic shape having a triangular cross section (212) in particular an equilateral triangular cross section.

9. Conveyor (1) according any of the preceding claims,
**characterized by**
a treatment facility (8), in which the object (9) is subject to a treatment,
the treatment is distinct from a conveying operation,
in particular the treatment facility is a cutting station in which the object (9) is subject to a cutting treatment.

10. Conveyor (1) according any of the preceding claims,
**characterized by**
a cleaning station (7), adapted to perform a cleaning operation to the carrier rods (21), in particular to carrier rods (21) located in the lower run (2L).

11. Conveyor (1) according to the preceding claim,
**characterized in**
**that** when passing the cleaning station (7), said carrier rods (21) of neighbored carrier segments (20) are located at a second distance to each other
and/or
**that** when passing the cleaning station (7), said carrier rods (21) are subject to a rotational movement along an axis of rotation (A), said axis of rotation (A) is defined by said carrier segment (20).

12. Conveyor (1) according to any of the preceding claims,
**characterized in**
**that** the conveyor (1) defines in top view a conveying corridor (C) extending from the first end (1A) to the second end (1B) parallel to the conveying direction (D),
wherein the conveyed object (9) is located exclusively within the conveying corridor (C),
wherein at last one, in particular all, of the following components are located outside of the conveying corridor (C), when viewed in top view:
- a rotation control (41);
- a stationary rotation control part (411) and/or a mobile rotation control part (412);
- a distance control (42);
- a stationary distance control part (423) and/or a mobile distance control part (421, 422);
- a connector (421, 422), connecting carrier rods (21) of different carrier segments (20);
- a direction guidance (5), adapted to guide the carrier segment (20) along the direction of travel;
- a stationary guidance part (15) and/or a mobile guidance part (25);
- drive transmission (3, 22) adapted to transmit a drive force from a conveyor drive to the carrier segments;
- a stationary drive transmitting part (3) and/or a mobile drive transmitting part (22);
wherein the mobile parts are attached to the carrier rod (21) and the stationary parts are attached to a main conveyor frame (12).

13. Conveyor (1) according to any of the preceding claims,
**characterized in**
**that** the conveyor (1) defines in top view a conveying corridor (C) extending from the first end (1A) to the second end (1B) parallel to the conveying direction (D),
wherein the conveyed object (9) is located exclusively within the conveying corridor (C),
wherein none of the following components are located inside of the conveying corridor (C), when viewed in top view:
- a stationary rotation control part (411) and a mobile rotation control part (412);
- a connector (421, 422), connecting carrier rods (21) of different carrier segments (20);
- a stationary guidance part (15) and a mobile guidance part (25);
- a stationary drive transmitting part (3) and a mobile drive transmitting part (22);
wherein said mobile parts are attached to the carrier rod (21) and the stationary parts are attached to a main conveyor frame (12).

14. Use of the conveyor (1) according to any of the preceding claims for conveying unpacked food (9), in particular unpacked meat, where the unpacked food (9) is in immediate contact with the conveying carrier (2).

15. Use of the conveyor (1) according to any of claims 1 to 13,
wherein the conveying surface (11) is used as working surface, in which the object, in particular the food (9), is subject to a treatment in particular a cutting treatment.

## Patentansprüche

1. Förderer (1), insbesondere Lebensmittelförderer (1), insbesondere Förderer für unverpackte Lebensmittel,
wobei der Förderer (1) einen Förderträger (2) umfasst,
wobei der Förderträger (2) dazu eingerichtet ist, ein Objekt, insbesondere Lebensmittel (9), von einem ersten Ende (1A) zu einem zweiten Ende (1B) entlang einer im Wesentlichen horizontalen Förderrichtung (D) zu befördern,
der Förderträger (2) mehrere getrennte Trägersegmente (20) umfasst, welche sich auf einem Umfangsweg (O) bewegen, so dass die Trägersegmente (20) ein Obertrum (2U), ein Untertrum (2L) und gekrümmte Wendeabschnitte (2C), die das Obertrum (2U) und das Untertrum (2L) verbinden, definieren;
wobei die Trägersegmente (20) eine Trägerstange (21) aufweisen, wobei die mehreren Trägerstangen (21), die am Obertrum (2U) angeordnet sind, eine Förderfläche (11) bilden, auf der insbesondere das geförderte Objekt (9) zu liegen kommt,
**dadurch gekennzeichnet,**
**dass** jede Trägerstange (21) auf ihrem Außenumfang mindestens zwei Seitenflächen (211a-d) aufweist, von denen jede überführbar ist zwischen
- einer Förderposition, insbesondere innerhalb des Trägersegments (20), in der die Seitenfläche (211a) Teil der Förderfläche (11) ist, und
- einer verlagerten Position, insbesondere innerhalb des Trägersegments (20), in der die Seitenfläche (211b-d) nicht Teil der Förderfläche (11) ist, sondern eine andere von den Seitenflächen (211a) derselben Trägerstange (21) Teil der Förderfläche (11) ist.

2. Förderer (1) nach dem vorhergehenden Anspruch,
**dadurch gekennzeichnet,**
**dass** jede Trägerstange (21) auf ihrem Außenumfang genau drei oder genau vier der Seitenflächen (211a-d) aufweist.

3. Förderer (1) nach einem der vorhergehenden Ansprüche,
**dadurch gekennzeichnet,**
**dass** die Seitenflächen (211a-d) durch eine Drehung der Trägerstange (21) zwischen der Förderposition und der verlagerten Position überführbar sind, wobei die Trägerstange (21) um eine Achse drehbar ist, die insbesondere senkrecht zur Bewegungsrichtung (D) und horizontal ausgerichtet ist, wenn sich die Trägerstange (21) im Obertrum (2U) befindet.

4. Förderer (1) nach einem der Ansprüche 2 oder 3,
**gekennzeichnet durch**
eine Drehungssteuerung (41), die dazu eingerichtet ist, die Seitenflächen (211a-d) durch eine Drehung der Trägerstange (21) selektiv zwischen der Förderposition und der verlagerten Position zu überführen;
wobei insbesondere die Drehungssteuerung (41) einen stationären Drehungssteuerungsteil (411) und einen beweglichen Drehungssteuerungsteil (412), der sich mit dem Trägersegment (20) bewegt, umfasst, wobei der bewegliche Drehungssteuerungsteil (412) und der stationäre Drehungssteuerungsteil (411) zum Steuern der Drehung der Trägerstangen miteinander interagieren.

5. Förderer (1) nach einem der vorhergehenden Ansprüche,
**gekennzeichnet durch**
eine Abstandssteuerung (42), die dazu eingerichtet ist, einen Abstand zwischen Trägerstangen (21) benachbarter Trägersegmente (20) selektiv zwischen einem ersten, kleineren Abstand und einem zweiten , größeren Abstand zu verstellen;
wobei insbesondere die Abstandssteuerung (42) einen stationären Abstandssteuerungsteil (423) und einen beweglichen Abstandssteuerungsteil (421, 422), der sich mit dem Trägersegment (20) bewegt, umfasst, wobei der bewegliche Abstandssteuerungsteil (421, 422) und der stationäre Abstandssteuerungsteil zum Steuern des Abstands der Trägerstangen miteinander interagieren.

6. Förderer (1) nach einem der vorhergehenden Ansprüche,
**gekennzeichnet durch**
eine Segmentführung (5), die dazu eingerichtet ist, die Trägersegmente (20) entlang der Förderrichtung (D) zu führen,
wobei insbesondere die Segmentführung (5) einen stationären Führungsteil (15) und einen beweglichen Führungsteil (25), der sich mit dem Trägersegment (20) bewegt, umfasst, wobei der bewegliche Führungsteil (25) und der stationäre Führungsteil (15) zum Führen der Trägersegmente (20) entlang der Förderrichtung (D) miteinander interagieren.

7. Förderer (1) nach einem der vorhergehenden Ansprüche,
**dadurch gekennzeichnet,**
**dass** Trägerstangen (21) benachbarter Trägersegmente (20), die sich im Obertrum (2U) befinden, in einem ersten Abstand angeordnet sind, wobei diese Trägerstangen (21) wenigstens teilweise eine geschlossene Förderfläche (11) bereitstellen,
wobei insbesondere die Trägerstangen (21) benachbarter Trägersegmente (20), die sich im Obertrum (2U) befinden, einander berühren;
wobei optional die Trägerstangen (21) benachbarter Trägersegmente (20), die sich im Untertrum (2L) befinden, in einem zweiten Abstand angeordnet sind, wobei
diese Trägerstangen (21) wenigstens teilweise eine geschlossene Förderfläche (11) bereitstellen, wobei insbesondere der zweite Abstand größer als der erste Abstand ist.

8. Förderer (1) nach einem der vorhergehenden Ansprüche,
**dadurch gekennzeichnet,**
**dass** die Trägerstangen (21) eine prismatische Form aufweisen,
wobei insbesondere die prismatische Form eine 4-seitige prismatische Form mit einem rechteckigen, insbesondere quadratischen Querschnitt (212) oder eine 3-seitige prismatische Form mit einem dreieckigen Querschnitt (212), insbesondere einem gleichseitigen dreieckigen Querschnitt ist.

9. Förderer (1) nach einem der vorhergehenden Ansprüche,
**gekennzeichnet durch**
eine Behandlungseinrichtung (8), in der das Objekt (9) einer Behandlung unterzogen wird,
wobei die Behandlung von einem Fördervorgang verschieden ist,
insbesondere die Behandlungseinrichtung eine Schneidstation ist, in der das Objekt (9) einer Schneidbehandlung unterzogen wird.

10. Förderer (1) nach einem der vorhergehenden Ansprüche,
**gekennzeichnet durch**
eine Reinigungsstation (7), die dazu eingerichtet ist, einen Reinigungsvorgang an den Trägerstangen (21) auszuführen, insbesondere an Trägerstangen (21), die sich im Untertrum (2L) befinden.

11. Förderer (1) nach dem vorhergehenden Anspruch,
**dadurch gekennzeichnet,**
**dass** beim Durchlaufen der Reinigungsstation (7) die Trägerstangen (21) benachbarter Trägersegmente (20) in einem zweiten Abstand voneinander angeordnet sind
und/oder
**dass** beim Durchlaufen der Reinigungsstation (7) die Trägerstangen (21) eine Drehbewegung um eine Drehachse (A) erfahren, wobei die Drehachse (A) durch das Trägersegment (20) definiert ist.

12. Förderer (1) nach einem der vorhergehenden Ansprüche,
**dadurch gekennzeichnet,**
**dass** der Förderer (1) in einer Draufsicht einen Förderkorridor (C) definiert, der sich vom ersten Ende (1A) zum zweiten Ende (1B) parallel zur Förderrichtung (D) erstreckt,
wobei sich das geförderte Objekt (9) ausschließlich innerhalb des Förderkorridors (C) befindet,
wobei sich wenigstens eine der folgenden Komponenten, insbesondere alle, in der Draufsicht betrachtet, außerhalb des Förderkorridors (C) befinden:
- eine Drehungssteuerung (41);
- ein stationärer Drehungssteuerungsteil (411) und/oder ein beweglicher Drehungssteuerungsteil (412);
- eine Abstandssteuerung (42);
- ein stationärer Abstandssteuerungsteil (423) und/oder ein beweglicher Abstandssteuerungsteil (421, 422);
- ein Verbinder (421, 422), der Trägerstangen (21) verschiedener Trägersegmente (20) verbindet;
- eine Richtungsführung (5), die dazu eingerichtet ist, das Trägersegment (20) entlang der Bewegungsrichtung zu führen;
- ein stationärer Führungsteil (15) und/oder ein beweglicher Führungsteil (25);
- eine Antriebsübertragung (3, 22), die dazu eingerichtet ist, eine Antriebskraft von einem Fördererantrieb auf die Trägersegmente zu übertragen;
- ein stationärer Antriebsübertragungsteil (3) und/oder ein beweglicher Antriebsübertragungsteil (22);
wobei die beweglichen Teile an der Trägerstange (21) angebracht sind und die stationären Teile an einem Fördererhauptrahmen (12) angebracht sind.

13. Förderer (1) nach einem der vorhergehenden Ansprüche,
**dadurch gekennzeichnet,**
**dass** der Förderer (1) in einer Draufsicht einen Förderkorridor (C) definiert, der sich vom ersten Ende (1A) zum zweiten Ende (1B) parallel zur Förderrichtung (D) erstreckt,
wobei sich das geförderte Objekt (9) ausschließlich innerhalb des Förderkorridors (C) befindet,
wobei sich keine der folgenden Komponenten, in der Draufsicht betrachtet, innerhalb des Förderkorridors (C) befindet:
- ein stationärer Drehungssteuerungsteil (411) und ein beweglicher Drehungssteuerungsteil (412);
- ein Verbinder (421, 422), der Trägerstangen (21) verschiedener Trägersegmente (20) verbindet;
- ein stationärer Führungsteil (15) und ein beweglicher Führungsteil (25);
- ein stationärer Antriebsübertragungsteil (3) und ein beweglicher Antriebsübertragungsteil (22);
wobei die beweglichen Teile an der Trägerstange (21) angebracht sind und die stationären Teile an einem Fördererhauptrahmen (12) angebracht sind.

14. Verwendung des Förderers (1) nach einem der vorhergehenden Ansprüche zum Fördern von unverpackten Lebensmitteln (9), insbesondere unverpacktem Fleisch, wobei sich die unverpackten Lebensmittel (9) in unmittelbarem Kontakt mit dem Förderträger (2) befinden.

15. Verwendung des Förderers (1) nach einem der Ansprüche 1 bis 13,
wobei die Förderfläche (11) als Arbeitsfläche verwendet wird, auf der das Objekt, insbesondere das Lebensmittel (9), einer Behandlung unterzogen wird, insbesondere einer Schneidbehandlung.

## Revendications

1. Convoyeur (1), notamment convoyeur pour aliments (1), notamment convoyeur pour aliments non emballés,
le convoyeur (1) comprend un support de transport (2),
dans lequel le support de transport (2) est conçu pour transporter un objet, notamment un aliment (9), d'une première extrémité (1A) à une deuxième extrémité (1B) le long d'une direction de transport (D), notamment horizontale,
le support de transport (2) comprend une pluralité de segments de support distincts (20) qui se déplacent sur une orbite circonférentielle (O), de sorte que les segments de support (20) définissent un tronçon supérieur (2U), un tronçon inférieur (2L) et des sections courbes (2C) raccordant le tronçon supérieur (2U) et le tronçon inférieur (2L) ;
dans lequel les segments de supports (20) comportent une tige de support (21), dans lequel la pluralité de tiges de support (21) situées sur ledit tronçon supérieur (2U) formant une surface de transport (11), notamment sur laquelle repose l'objet transporté (9),
**caractérisé en ce que**
chaque tige de support (21) présente sur son périmètre extérieur au moins deux surfaces latérales (211a-d), dont chacune peut être déplacée entre
- une position de transport, notamment à l'intérieur dudit segment de support (20), dans laquelle ladite surface latérale (211a) fait partie de la surface de transport (11), et
- une position déboîtée, notamment à l'intérieur dudit segment de support (20), dans laquelle ladite surface latérale (211b-d) ne fait pas partie de la surface de transport (11), mais une autre des surfaces latérales (211a) de la même tige de support (21) fait partie de la surface de transport (11).

2. Convoyeur (1) selon la revendication précédente,
**caractérisé en ce que**
chaque tige de support (21) présente sur son périmètre extérieur exactement trois ou exactement quatre desdites surfaces latérales (211a-d).

3. Convoyeur (1) selon une quelconque des revendications précédentes,
**caractérisé en ce que**
les surfaces latérales (211a-d) peuvent être déplacées entre ladite position de transport et ladite position déboîtée par rotation de la tige de support (21), dans lequel ladite tige de support (21) peut tourner le long d'un axe perpendiculaire à la direction de déplacement (D) et orienté horizontalement, vu lorsque la tige de support (21) se trouve dans le tronçon supérieur (2U).

4. Convoyeur (1) selon une quelconque des revendications 2 ou 3,
**caractérisé par**
une commande de rotation (41) adaptée pour transférer sélectivement lesdites surfaces latérales (211a-d) entre ladite position de transport et ladite position déboîtée par rotation de la tige de support (21) ;
la commande de rotation (41) comprenant notamment une partie de commande de rotation fixe (411) et une partie de commande de rotation mobile (412) se déplaçant avec ledit segment de support (20), dans lequel pour commander la rotation desdites tiges de support, la partie de commande de rotation mobile (412) et la partie de commande de rotation fixe (411) interagissent l'une avec l'autre.

5. Convoyeur (1) selon une quelconque des revendications précédentes,
**caractérisé par**
une commande de distance (42) adaptée pour régler sélectivement une distance entre les tiges de support (21) de segments de supports voisins (20) entre une première distance plus petite et une deuxième distance plus grande ;
la commande de distance (42) comprenant notamment une partie de commande de distance fixe (423) et une partie de commande de distance mobile (421, 422) se déplaçant avec ledit segment de support (20), dans lequel pour commander la distance desdites tiges de support, la partie de commande de distance mobile (421, 422) et la partie de commande de distance fixe interagissent l'une avec l'autre.

6. Convoyeur (1) selon une quelconque des revendications précédentes,
**caractérisé par**
un guidage de segments (5) adapté pour guider les segments de support (20) le long de la direction de transport (D),
le guidage de segments (5) comprenant notamment une partie de guidage fixe (15) et une partie de guidage mobile (25) se déplaçant avec ledit segment de support (20), dans lequel pour guider les segments de support (20) le long de la direction de transport (D), la partie de guidage mobile (25) et la partie de guidage fixe (15) interagissent l'une avec l'autre.

7. Convoyeur (1) selon une quelconque des revendications précédentes,
**caractérisé en ce que**
les tiges de support (21) des segments de supports voisins (20) situés dans le tronçon supérieur (2U) sont situées à une première distance, où lesdites tiges de support (21) forment au moins partiellement une surface de transport fermée (11), notamment lesdites tiges de support (21) des segments de support voisins (20) situées dans le tronçon supérieur (2U) sont en contact l'une avec l'autre ;
optionnellement : lesdites tiges de support (21) des segments de supports voisins (20) situés dans le tronçon inférieur (2L) sont situées à une deuxième distance, où lesdites tiges de support (21) forment au moins partiellement une surface de transport fermée (11), notamment dans lequel la deuxième distance est supérieure à la première distance.

8. Convoyeur (1) selon une quelconque des revendications précédentes,
**caractérisé en ce que**
lesdites tiges de support (21) présentent une forme prismatique,
notamment une forme prismatique à 4 côtés de section transversale rectangulaire, notamment quadratique (212), ou une forme prismatique à 3 côtés de section transversale triangulaire (212), notamment une section transversale triangulaire équilatérale.

9. Convoyeur (1) selon une quelconque des revendications précédentes,
**caractérisé par**
une installation de traitement (8) dans laquelle l'objet (9) est soumis à un traitement, le traitement est distinct d'une opération de transport,
notamment l'installation de traitement est un poste de découpe dans lequel l'objet (9) est soumis à un traitement de découpe.

10. Convoyeur (1) selon une quelconque des revendications précédentes,
**caractérisé par**
un poste de nettoyage (7) adapté pour effectuer une opération de nettoyage sur les tiges de support (21), notamment les tiges de support (21) situées dans le tronçon inférieur (2L).

11. Convoyeur (1) selon la revendication précédente,
**caractérisé en ce que**
lors du passage devant la station de nettoyage (7), lesdites tiges de support (21) des segments de supports voisins (20) sont situées à une deuxième distance les unes des autres
et/ou
lors du passage devant la station de nettoyage (7), lesdites tiges de support (21) sont soumises à un mouvement de rotation le long d'un axe de rotation (A), ledit axe de rotation (A) es défini par ledit segment de support (20).

12. Convoyeur (1) selon une quelconque des revendications précédentes,
**caractérisé en ce que**
le convoyeur (1) définit, en vue de dessus, un couloir de transport (C) s'étendant de la première extrémité (1A) à la deuxième extrémité (1B) parallèlement à la direction de transport (D),
dans lequel l'objet transporté (9) se trouve exclusivement à l'intérieur du couloir de transport (C),
dans lequel au moins un, notamment tous, des composants suivants sont situés à l'extérieur du couloir de transport (C), en vue de dessus :
- une commande de rotation (41) ;
- une pièce de commande de rotation fixe (411) et/ou une pièce de commande de rotation mobile (412) ;
- une commande de distance (42) ;
- une pièce de commande de distance fixe (423) et/ou une pièce de commande de distance mobile (421, 422) ;
- un connecteur (421, 422) raccordant les tiges de support (21) de différents segments de supports (20) ;
- un guidage de direction (5), adapté pour guider le segment de support (20) le long de la direction de déplacement ;
- une pièce de guidage fixe (15) et/ou une pièce de guidage mobile (25) ;
- une transmission d'entraînement (3, 22) adaptée pour transmettre une force d'entraînement d'un entraînement de convoyeur aux segments de support ;
- une pièce de transmission d'entraînement fixe (3) et/ou une pièce de transmission d'entraînement mobile (22) ;
dans lequel les pièces mobiles sont fixées à la tige de support (21) et les pièces fixes sont fixées à un châssis de convoyeur principal (12).

13. Convoyeur (1) selon une quelconque des revendications précédentes,
**caractérisé en ce que**
le convoyeur (1) définit, en vue de dessus, un couloir de transport (C) s'étendant de la première extrémité (1A) à la deuxième extrémité (1B), parallèlement à la direction de transport (D),
dans lequel l'objet transporté (9) se trouve exclusivement à l'intérieur du couloir de transport (C),
dans lequel aucun des composants suivants ne se trouve à l'intérieur du couloir de transport (C), en vue de dessus :
- une pièce de commande de rotation fixe (411) et une pièce de commande de rotation mobile (412) ;
- un connecteur (421, 422) raccordant les tiges de support (21) de différents segments de support (20) ;
- une pièce de guidage fixe (15) et une pièce de guidage mobile (25) ;
- une pièce de transmission d'entraînement fixe (3) et une pièce de transmission d'entraînement mobile (22) ;
dans lequel lesdites pièces mobiles sont fixées à la tige de support (21) et les pièces fixes sont fixées à un châssis de convoyeur principal (12).

14. Utilisation du convoyeur (1) selon une quelconque des revendications précédentes pour transporter des aliments non emballés (9), notamment de la viande non emballée, où les aliments non emballés (9) sont en contact immédiat avec le support de transport (2).

15. Utilisation du convoyeur (1) selon une quelconque des revendications 1 à 13, dans laquelle la surface de transport (11) sert de surface de travail sur laquelle l'objet, notamment l'aliment (9), est soumis à un traitement, notamment un traitement de découpe.
